# EUROPÄISCHE PATENTANMELDUNG

(11) **EP 4 530 045 A1**
(43) Veröffentlichungstag der Anmeldung: **02.04.2025**
(21) Anmeldenummer: 23200420.0
(22) Anmeldetag: 28.09.2023
(51) Int. Cl.: B29C 49/48, B29C 49/06, B29C 49/36, B29C 49/56, B29L 31/00

(54) **BLASFORMEINHEIT FÜR EINE BLASFORMANLAGE**

(71) Anmelder: KHS GmbH, 44143 Dortmund (DE)
(72) Erfinder: Lewin, Frank, 22889 Tangstedt (DE); Baumgarte, Rolf, 22926 Ahrensburg (DE); Klatt, Dieter, 22147 Hamburg (DE)
(74) Vertreter: Andrejewski - Honke Patent- und Rechtsanwälte Partnerschaft mbB

(57) **Zusammenfassung**

Die Erfindung betrifft eine Blasformeinheit für eine Blasformanlage zum Umformen von Vorformlingen aus Kunststoff zu Behältern mit einer Blasform (1) und einer der Blasform (1) zugeordneten Blaseinrichtung, wobei die Blasform (1) aus einem ersten und zumindest einem zweiten Blasformteil (2, 3) gebildet ist, welche zwischen einer Öffnungs- und Schließstellung zueinander verschwenkbar sind. Erfindungsgemäß ist das erste und/oder das zweite Blasformteil (2, 3) über eine Medienschnittstelle (10a, 10b, 10c) in der Schließstellung mit einer Medienversorgung verbunden und in der Öffnungsstellung von der Medienversorgung entkoppelt.

## Beschreibung

Die vorliegende Erfindung betrifft eine Blasformeinheit für eine Blasformanlage zum Umformen von Vorformlingen aus Kunststoff zu Behältern mit einer Blasform und einer der Blasform zugeordneten Blaseinrichtung, wobei die Blasform aus einem ersten und zumindest einem zweiten Blasformteil gebildet ist, welche zwischen Öffnungs- und Schließstellung zueinander verschwenkbar sind.

Im Besonderen bezieht sich die Erfindung auf eine Blasformeinheit, welche in Blasformanlagen für die Getränkeindustrie eingesetzt werden, wobei dann aus den Vorformlingen Getränkebehälter, insbesondere Getränkeflaschen, gebildet werden. Derartige Blasformeinheiten sind üblicherweise an einem Transportkarussell angeordnet, wobei während der Rotation des Transportkarussells die Vorformlinge zunächst in die Blasform eingesetzt werden und anschließend der Innenraum der Vorformlinge mit Druckluft beansprucht wird. Durch das Einbringen eines Innendruckes werden die Wandungen der Vorformlinge nach außen in eine von den Blasformteilen gebildete Blaskavität gedrückt, welche der Form der zu fertigenden Getränkeflaschen entspricht. Zusätzlich kann auch eine Reckstange vorgesehen sein, welche sukzessive entlang der Behälterachse in die Blasform eingefahren wird und eine gewisse axiale Längung der Vorformlinge ermöglicht. Ein solches Verfahren wird auch als Streck-Blasformen bzw. die Anlagen als Streck-Blasanlagen bezeichnet.

Wie eingangs erläutert, bestehen die Blasformen aus zumindest zwei Blasformteilen, welche gemeinsam eine Blaskavität bilden. Hierbei liegt es im Rahmen der Erfindung, dass die Blasformteile jeweils einteilig oder aber auch mehrteilig ausgebildet sein können, wobei bei einer mehrteiligen Ausbildung insbesondere ein Formträger und ein in dem Formträger angeordnetes Formatteil vorgesehen ist und wobei dann über das Formatteil die eigentliche Blaskavität ausgebildet wird. Dies hat den Vorteil, dass für unterschiedliche Behältertypen lediglich das Formatteil nicht aber die gesamte Blasform ausgetauscht werden muss, sodass sich ein deutlich reduzierter Montageaufwand ergibt. Die eigentliche Verstellung bzw. Verschwenkung der einzelnen Blasformteile wird dann über die Formatträger bewirkt.

Hierbei ist zu beachten, dass die Blasformteile üblicherweise an eine oder mehrere Medienversorgungen angeschlossen sind, wobei im Rahmen der Erfindung mit Medien sowohl fluide Medien als auch elektrische Medien gemeint sind. So ist es beispielsweise möglich, die Blasformen, insbesondere die Formatteile, während des Betriebs zu temperieren bzw. aktiv zu erwärmen oder zu kühlen. Durch ein Erwärmen soll insbesondere verhindert werden, dass die Vorformlinge sich an einigen Stellen zu schnell abkühlen, sodass es dann schwieriger wird, die Vorformlinge auszuformen. Gleichzeitig können so auch Spannungen innerhalb des Materials verhindert bzw. verringert werden. Eine Kühlung kann insbesondere im Bereich eines sogenannten Neckringes vorgesehen sein. Bei dem Neckring handelt es sich um einen vorstehenden Ring unterhalb eines Außengewindes des Vorformlings, wobei das Außengewinde zur Aufnahme einer Verschlusskappe ausgebildet ist. Entsprechend handelt es sich um einen Bereich, welcher bereits vorgefertigt ist und welcher im Zuge des Blasformens nicht verformt werden soll. Dies kann über eine aktive Kühlung gewährleistet werden.

Um eine solche Temperierung während des Blasformens zu ermöglichen, müssen die Blasformen mit einer Medienversorgung verbunden werden. Hierzu werden an den Blasformteilen nach der Montage entsprechende Versorgungsleitungen befestigt, welche während des Betriebes der Blasformeinheiten festgelegt sind. Hierbei ist allerdings zu beachten, dass durch die häufige Schwenkbewegung der Blasformteile im Zuge des Öffnens und Schließens der Blasform auch die Leitungen starken Belastungen ausgesetzt werden, welche dazu führen, dass diese in regelmäßigen Abständen überprüft und gegebenenfalls ausgetauscht werden müssen.

Vor diesem Hintergrund liegt der Erfindung die Aufgabe zugrunde, eine Blasformeinheit anzugeben, welche sich durch einen geringeren Wartungsaufwand auszeichnet.

Gegenstand und Lösung dieser Aufgabe ist eine Blasformeinheit gemäß Patentanspruch 1. Demnach ist vorgesehen, dass das erste und/oder das zweite Blasformteile über eine Medienschnittstelle in der Schließstellung mit einer Medienversorgung verbunden und in der Öffnungsstellung von der Medienversorgung entkoppelt ist.

Die Erfindung geht von der Erkenntnis aus, dass es während des Öffnungszustandes der Blasform nicht zwingend erforderlich ist, die Blasform mit verschiedenen Medien zu versorgen, insbesondere da der Öffnungszustand im Verhältnis zum Schließzustand für ein wesentlich kürzeres Zeitintervall vorliegt. Dieses kurze Zeitintervall ist in der Regel nicht ausreichend, um eine Auskühlung der Blasformteile zu bewirken. Sobald die Blasform wieder in den Schließzustand überführt wird, erfolgt auch erneut eine Zuführung der einzelnen Medien. Durch eine solche Ausbildung kann in vorteilhafter Art und Weise vermieden werden, dass die zur Versorgung erforderlichen Leitungen oder Schläuche starken Bewegungen und damit Belastungen unterliegen, da anstelle einer bewegten Medienleitung, die Medienschnittstelle vollständig entkoppelt wird.

In diesem Zusammenhang ist anzumerken, dass die Erfindung nicht nur auf Ausgestaltungen begrenzt ist, bei der die Blasform ausschließlich aus zwei Blasformteilen gebildet ist. Vielmehr sieht die Erfindung gemäß einer üblichen Ausgestaltung auch vor, dass zumindest drei Blasformteile vorgesehen sind, von denen ein Blasformteil als Bodenteil ausgebildet ist. Die Zuordnung zum ersten oder zum zweiten Blasformteil erfolgt hierbei in freier Art und Weise, sodass das Bodenteil ein erstes oder ein zweites Blasformteile darstellen kann.

Gemäß einer bevorzugten Ausgestaltung der Erfindung weist die Medienschnittstelle ein an dem ersten oder dem zweiten Blasformteil angeordnetes erstes Schnittstellenteil auf, welches mit einem mit der Medienversorgung verbundenen zweiten Schnittstellenteil in der Schließstellung verbindbar ist. Entsprechend wird deutlich, dass die Medienschnittstelle nicht ausschließlich in einem Blasformteil gebildet ist. Vielmehr besteht es aus zumindest zwei Schnittstellenteilen, welche einerseits in dem Blasformteil und andererseits der entsprechenden Medienversorgung zugeordnet werden. Die Art der Medienschnittstelle und damit auch die Art der Schnittstellenteile richten sich im Wesentlichen nach Art des Mediums.

So sieht eine bevorzugte Ausgestaltung vor, dass die Medienschnittstelle als Fluidanschluss ausgebildet ist und das erste Schnittstellenteil an eine in dem ersten und/oder zweiten Blasformteil angeordneten Fluidkanal anschließt. Entsprechend handelt es sich bei der Medienschnittstelle und damit auch bei den Schnittstellenteilen um Bauteile, welche dazu vorgesehen sind, ein Fluid zwischen der Medienversorgung und dem jeweiligen Blasformteil zu übertragen. Mit einem Fluid ist in diesem Zusammenhang jedwede Art von Medium gemeint, welches in einem gasförmigen und/oder flüssigen Zustand vorliegt. Insbesondere handelt es sich hierbei um Wasser, Wasserdampf oder Druckluft, wobei sich die Art des Fluids an dem zu beabsichtigten Zweck orientiert, welcher nachfolgend näher dargestellt wird.

So sieht beispielsweise eine besonders bevorzugte Ausgestaltung vor, dass der Fluidkanal an beiden Enden an eine Medienschnittstelle bzw. an ein erstes Schnittstellenteil anschließt, sodass entsprechend zumindest zwei Medienschnittstellen an dem Blasformteil vorgesehen sind. Hierbei ermöglicht dann eine der Medienschnittstellen eine entsprechende Ankopplung an die Medienversorgung. Über die zweite Medienschnittstelle kann eine Koppelung mit einem Rücklauf der Medienversorgung erfolgen. Alternativ ist es aber auch möglich die zweite Medienschnittstelle mit einer anderweitigen Vorrichtung zu verbinden.

Die Idee dahinter besteht darin, dass mittels der Medienversorgung das Blasformteil mit einem Fluid versorgt wird, sodass eine entsprechende Medienschnittstelle als Zulauf zum Blasformteil und die jeweils andere Medienschnittstelle als Ablauf verstanden wird. Eine solche Ausgestaltung kann insbesondere sinnvoll sein, wenn der Fluidkanal in der Schließstellung an eine Temperiervorrichtung anschließt. Mit einer Temperiervorrichtung ist in diesem Zusammenhang eine Vorrichtung gemeint, welche aktiv ein Fluid temperieren bzw. erwärmen und/oder kühlen kann. Eine solche Temperiervorrichtung wurde bereits eingangs erwähnt und dargestellt, in welchem Zusammenhang eine aktive Kühlung oder Erwärmung der Blasformteile sinnvoll ist. Über den Zulauf wird das Blasformteil mit einem Fluid versorgt, welches entsprechend als Temperierfluid ausgebildet ist und welche es nach Durchströmen des Fluidkanals über die andere Medienschnittstelle entnommen wird.

Bevorzugt ist vorgesehen, dass eine Rückführung in die Temperiervorrichtung erfolgt, in welcher dann eine erneute Erwärmung oder Abkühlung des Temperierfluids durchgeführt wird. Bei dem Temperierfluid handelt es sich in einem solchen Fall bevorzugt um Wasser oder Wasserdampf. Selbstverständlich ist es aber auch möglich ein Mischfluid aus Wasser und Wasserdampf vorzusehen. Auch anderweitige Fluide, welche der Erwärmung oder Kühlung dienen, sind grundsätzlich als Temperierfluid geeignet.

Eine alternative Ausgestaltung sieht vor, dass der Fluidkanal an einem der Medienschnittstelle gegenüber liegenden Ende offen ist. Gemäß einer solchen Ausgestaltung ist der Fluidkanal entsprechend nur an einem Ende mit der Medienversorgung verbunden, wobei an dem gegenüberliegenden Ende keine Anbindung an eine weitere Vorrichtung vorgesehen ist. Eine solche Ausgestaltung ist insbesondere dann sinnvoll, wenn das offene Ende des Fluidkanals in einem die Blaskavität bildenden Abschnitt der Blasformteile angeordnet ist. Ausgehend von einer solchen Ausgestaltung kann dann das Fluid dazu genutzt werden, den bereits fertig umgeformten Vorformling bzw. die Getränkeflasche aus der Blaskavität herauszudrücken. Entsprechend handelt es sich bei dem Fluid vorzugsweise um Druckluft. Das offene Ende des Fluidkanals kann sowohl an den seitlichen Blasformteilen als auch an einem Bodenteil enden, so dass der Behälter entweder seitlich und/oder nach oben herausgedrückt wird. Bei der Medienversorgung handelt es sich entsprechend um eine Druckluftversorgung und nicht um eine Temperiervorrichtung.

Sofern die zumindest eine Medienschnittstelle als Fluidanschluss ausgebildet ist, ergibt sich die Problematik, dass bei einer Entkopplung der Medienschnittstelle bzw. einer Entkopplung der Schnittstellenteile miteinander das jeweilige Fluid dennoch in die Blasform eintreten kann, da das zweite Schnittstellenteil weiterhin über die Medienversorgung mit einem Fluid versorgt wird. Gerade im Zusammenhang mit einem Temperierfluid ist eine solche Ausgestaltung jedoch von Nachteil, sodass eine bevorzugte Weiterbildung der Erfindung vorsieht, dass das erste und/oder das zweite Schnittstellenteil in der Öffnungsstellung fluiddicht ausgebildet ist. Mit einer fluiddichten Ausbildung ist in diesem Zusammenhang gemeint, dass der Fluidkanal innerhalb des Blasformteils oder aber auch etwaige Anschlüsse der Medienversorgung an das zweite Schnittstellenteil nach außen hin geschlossen sind, sodass kein Fluid aus den Blasformteilen oder aus der Medienversorgung austreten kann. Dies kann beispielsweise dadurch bewirkt werden, dass das erste und/oder das zweite Schnittstellenteil einen Ventilkörper beinhaltet, welcher dazu eingerichtet ist, in der Öffnungsstellung geschlossen und in der Schließstellung des Blasformteiles geöffnet zu werden. Grundsätzlich reicht es im Rahmen der Erfindung aus, wenn ein entsprechender Ventilkörper an dem zweiten Schnittstellenteil gebildet ist. Allerdings kann auch in Kombination mit dem ersten Schnittstellenteil eine solche Ausgestaltung sinnvoll sein, insbesondere wenn verhindert werden soll, dass Restfluid aus den Fluidkanälen des Blasformteils austritt.

Eine Weiterbildung der Erfindung sieht vor, dass alternativ oder in Kombinationen zumindest eine Medienschnittstelle als elektrischer Anschluss ausgebildet ist, wobei das erste Schnittstellenteil an zumindest einen elektronischen Verbraucher an oder in dem ersten und/oder dem zweiten Blasformteil anschließt. Gemäß einer solchen Ausgestaltung kann somit über die Medienschnittstelle elektrischer Strom bzw. ein elektrisches Signal übermittelt werden. Entsprechend handelt es sich bei dem elektrischen Anschluss um einen Anschluss von elektrischen Leitern, welche über die Medienschnittstelle miteinander gekoppelt werden können. Hierbei ist eine Medienschnittstelle nicht darauf beschränkt, lediglich einen Leiter zu verbinden. Grundsätzlich kann die Medienschnittstelle bzw. der elektrische Anschluss auch eine Koppelung mehrerer Leitern bzw. Adern ermöglichen.

Eine solche Ausgestaltung kann für verschiedene Anwendungszwecke genutzt werden, wobei eine bevorzugte Ausgestaltung vorsieht, dass der elektrische Verbraucher eine Temperiervorrichtung und/oder eine Messeinrichtung ist. Bereits zuvor wurde auf eine Temperiervorrichtung hingewiesen, wobei in diesem Zusammenhang die Temperiervorrichtung außerhalb der Blasform angeordnet ist und dazu dient, ein Temperierfluid zu temperieren. Dieses Temperierfluid wird dann über die Medienschnittstelle einem Blasformteil zugeführt, wobei über das Temperierfluid in den Fluidkanälen eine Erwärmung oder Abkühlung des Blasformteils bewirkt wird.

Alternativ kann es sich bei der Temperiervorrichtung aber auch um zumindest eine Heizwendel handeln, welche sich aufgrund ihres elektrischen Widerstandes bei Anliegen einer Spannung erwärmt. Entsprechend werden diese in dem Blasformteil angeordneten Heizwendeln über den elektrischen Anschluss mit einer Medienversorgung bzw. Stromversorgung gekoppelt und ermöglichen in einem Schließzustand der Blasform eine Erwärmung des entsprechenden Blasformteils. Eine solche Ausgestaltung weist gegenüber den bisherigen Lösungen den Vorteil auf, dass in einem Öffnungszustand die Heizwendeln sicher von der Stromversorgung getrennt sind und so auch bei etwaigen Beschädigungen der Isolation stets ein hohes Maß an Sicherheit für den Anwender gewährleistet ist. Zugleich muss gegenüber Ausgestaltungen mit einem Temperierfluid nicht separat sichergestellt werden, dass die Fluidkanäle nach außen hin in einem Öffnungszustand der Blasform abgedichtet werden, um einen Austritt des Temperierfluids zu vermeiden.

Eine Messvorrichtung kann eine Vielzahl möglicher Messsensoren umfassen oder entsprechend als Messsensor ausgebildet sein. Bei diesem Messsensor kann es sich beispielsweise um einen Temperaturfühler handeln, welcher die Temperaturen der Blasformteile erfasst. Alternativ kann es sich auch um einfache Messsensoren handeln, welche den Schließzustand oder den Öffnungszustand der Blasform erfassen.

Ausgehend von einer solchen Ausgestaltung ist bevorzugt vorgesehen, dass die Schnittstellenteile als Steckverbindung ausgebildet sind. Hierbei ist dann das erste oder das zweite Schnittstellenteil in männlicher und das jeweils andere Schnittstellenteil in weiblicher Art und Weise ausgebildet, sodass diese in dem Schließzustand ineinander eingreifen können, um eine elektrische Kontaktierung zu ermöglichen. Alternativ können auch federbelastete Pins zum Einsatz kommen, welche auf Kontaktplatten befestigt werden.

Eine Weiterbildung der Erfindung sieht vor, dass die miteinander verbindbaren Schnittstellenteile zumindest einer Medienschnittstelle an dem ersten und dem zweiten Blasformteil angeordnet sind. Gemäß einer solchen Ausgestaltung weist dann eines der Blasformteile die erste Schnittstelle und das jeweils andere Blasformteilet das zweite Schnittstellenteil auf, sodass eine Medienübertragung zwischen den Blasformteilen erfolgt. Entsprechend ist dann bevorzugt ein Blasformteil fest mit der Medienversorgung verbunden, während ein weiteres Blasformteil über das andere Blasformteil mit der Medienversorgung gekoppelt ist.

Entsprechend kann beispielsweise das zweite Blasformteile sowohl in einem Öffnungs- als auch in einem Schließzustand fest mit der Medienversorgung gekoppelt, während das erste Blasformteile lediglich in einem Schließzustand über das zweite Blasformteile mit der Medienversorgung gekoppelt wird.

Eine solche Ausgestaltung ist insbesondere dann sinnvoll, wenn das zweite Blasformteil feststehend ausgebildet ist. Mit einer feststehenden Ausbildung ist in diesem Zusammenhang gemeint, dass das zweite Blasformteil nicht aktiv an der Schwenkbewegung teilnimmt. Vielmehr erfolgt das Öffnen- und Schließen der Blasform allein über eine Schwenkbewegung des ersten Blasformteils. Ausgehend hiervon kann dann das erste Schnittstellenteil zumindest einer Medienschnittstelle an dem ersten Blasformteile angeordnet sein. Das zweite Schnittstellenteil ist dann bevorzugt entsprechend an dem zweiten Blasformteil gebildet. Bei einer solchen Ausgestaltung ist zu beachten, dass eine entsprechende Medienschnittstelle für das zweite Blasformteil nicht den besonders hohen Belastungen im Zuge einer Schwenkbewegung unterliegt, sodass der Anschluss des zweiten Blasformteils an die Medienversorgung in bekannter fest verbauter Art und Weise erfolgen kann.

Eine Weiterbildung der Erfindung sieht vor, dass die Blasformteile über zumindest eine Verriegelungseinrichtung in der Schließstellung miteinander verriegelbar sind. Mithilfe einer solchen Verriegelungseinrichtung ist es möglich, ein Auseinanderschwenken der Blasformteile zu verhindern. Dies spielt gerade während des Blasprozesses eine besondere Bedeutung. Hierbei ist mithilfe einer solchen Verriegelungseinrichtung bevorzugt nicht nur ein Auseinanderschwenken sondern auch eine Zuhaltung der Blasformen möglich. Mit einer Zuhaltung ist gemeint, dass die Blasformteile mit einem bestimmten Druck aneinander gepresst werden.

Ausgehend von einer solchen Ausgestaltung kann es von Vorteil sein, wenn zumindest eine Medienschnittstelle in der Verriegelungseinrichtung angeordnet ist. Entsprechend wird mit der Verriegelungseinrichtung nicht nur einer Verriegelung sondern zugleich auch eine Koppelung der Schnittstellenteile miteinander bewirkt. Selbstverständlich liegt es aber auch im Rahmen der Erfindung, dass die Medienschnittstellen von der Verriegelungseinrichtung getrennt sind und beispielsweise neben dieser angeordnet sind.

Eine alternative oder ergänzende Ausgestaltung der Erfindung sieht vor, dass ein mit dem Medienversorgung verbundener Anschlussblock mit zumindest einem zweiten Schnittstellenteil vorgesehen ist, wobei das erste und/oder das zumindest zweite Blasformteil jeweils über eine erste Schnittstelle mit dem Anschlussblock in der Schließstellung verbunden sind. Eine solche Ausgestaltung kann sinnvoll sein, wenn beide Blasformteile verschwenkbar ausgebildet sind, sodass dann entsprechend auch beide Blasformteile gegen diesen Anschlussblock verschwenkt und die entsprechenden Schnittstellenteile miteinander gekoppelt werden. Selbstverständlich ist eine solche Ausgestaltung auch möglich, wenn ein Blasformteil feststehend ausgebildet ist, wobei dann das erste oder das zweite Schnittstellenteil als Bodenteil ausgebildet ist. Der Anschlussblock kann vorzugsweise an dem feststehenden Blasformteil oder aber separat davon an der Blasformeinheit montiert sein.

Gegenstand der Erfindung ist ferner eine Blasformanlage mit zumindest einer erfindungsgemäßen Blasformeinheit, wobei die zumindest eine Blasformeinheit an einem rotierbar angetriebenen Träger angeordnet ist.

Ausgehend von einer solchen Ausgestaltung ist bevorzugt vorgesehen, dass eine Antriebsvorrichtung vorgesehen ist, welche eine Schließbewegung und eine Öffnungsbewegungen zwischen den Blasformteilen bewirkt. Die Antriebseinrichtung ist darüber hinaus bevorzugt eine kurvengesteuerte Antriebseinrichtung, sodass entsprechend die Bewegung allein aufgrund der Rotation der Blasformeinheiten an dem rotierbar angetriebenen Träger bewirkt wird.

Im Folgenden wird die Erfindung anhand eines Ausführungsbeispiels, näher erläutert. Es zeigen:
- Fig. 1: eine Blasform für eine Blasformeinheit mit Medienanschlüssen gemäß dem Stand der Technik
- Fig. 2: eine erfindungsgemäße Blasform mit Medienschnittstellen zur Verbindung der Blasformteile untereinander
- Fig. 3: eine alternative Ausgestaltung einer Blasform mit einem Bodenteil
- Fig. 4: eine alternative Ausgestaltung mit Anschlussblock in einer Öffnungsstellung.

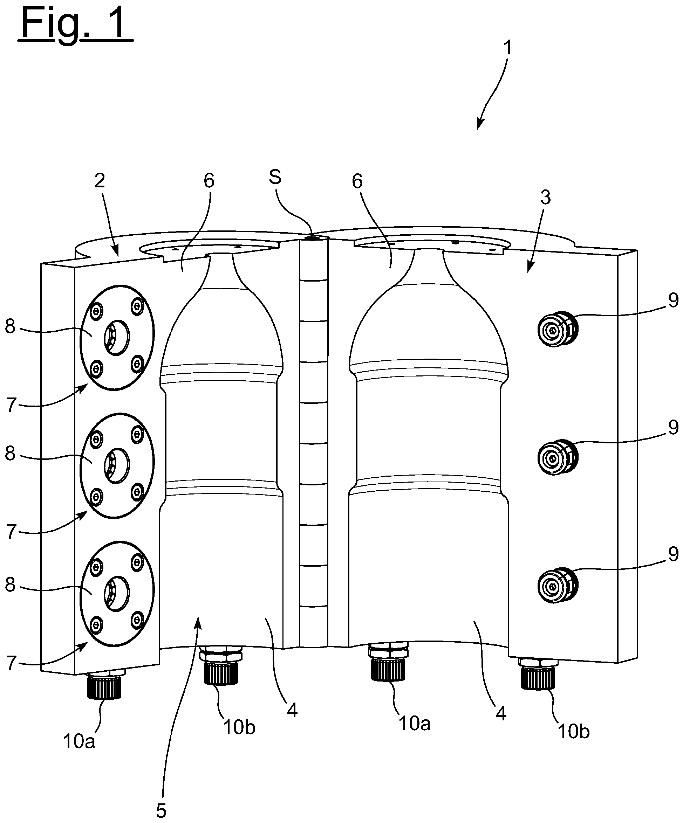

Die Fig. 1 zeigt eine Blasform 1 für eine Blasformeinheit einer Blasformanlage zum Umformen von Vorformlingen aus Kunststoff zu Getränkebehältern. Die Blasformeinheit weist in diesem Zusammenhang zusätzlich eine nicht dargestellte Blaseinrichtung auf, über die die Blasform 1 bzw. ein in der Blasform 1 angeordneter Vorformling mit Druckluft beaufschlagt werden kann, sodass aus diesem ein Getränkebehälter, insbesondere eine Getränkeflasche, ausgeformt werden kann.

Die Blasform 1 besteht aus einem ersten und einem zweiten Blasformteil 2, 3, welche jeweils eine Ausformung 4 zur gemeinsamen Ausbildung einer Blaskavität 5 aufweisen. Diese Blaskavität 5 entspricht im Wesentlichen der Form des zu fertigenden Behälters.

Die beiden Blasformteile 2, 3 sind darüber hinaus über eine Schwenkachse S zueinander verschwenkbar eingerichtet, sodass die Blasform 1 zwischen einer Öffnungs- und einer Schließstellung bewegt werden kann. In der Fig. 1 ist in diesem Zusammenhang die Öffnungsstellung der Blasform 1 gezeigt.

Die Bewegung zwischen einer Öffnungs- und einer Schließstellung erfolgt üblicherweise kurvengesteuert. Hierbei ist zu beachten, dass die Blasformeinheit und damit auch die Blasform 1 an einem ebenfalls nicht näher dargestellten rotierbaren Träger angeordnet ist, sodass die Umformung der Vorformlinge zu Getränkebehältern während eines rotierenden Transports an dem Träger erfolgt. Hierzu ist es erforderlich, dass die Blasformteile 2, 3 an definierten Winkelposition zueinander- oder auseinanderschenken. Das Einbringen der Vorformlinge erfolgt in der gezeigten Öffnungsstellung.

Nach dem Einbringen der Vorformlinge erfolgt dann ein Überführen in die Schließstellung, wobei anschließend die beiden Blasformteile 2, 3 an einer Anlagefläche 6 aneinander liegen. Diese Anlagefläche 6 definiert eine Trennebene zwischen den Blasformteilen 2, 3 in der diese über eine ausreichend große Anpresskraft miteinander verpresst werden müssen, damit entlang dieser Trennebene eine saubere Umformung der Vorformlinge erfolgen kann.

Entsprechend sind Verriegelungseinrichtungen 7 vorgesehen, über die die Blasformteile 2, 3 in der Schließstellung miteinander verriegelt und aneinandergepresst werden. Diese Verriegelungseinrichtungen 7 bestehen jeweils aus einem Spannfutter 8 und einem zugeordneten Spannbolzen 9, wobei die Spannfutter 7 in dem 1 ersten Blasformteil 2 und die Spannbolzen 9 in dem zweiten Blasformteil 3 angeordnet sind. Im Zuge der Schließbewegung werden dann die Spannbolzen 9 jeweils in eine Öffnung des zugeordneten Spannfutters 7 eingeführt und dort gehalten.

Um während des Blasprozesses die Blasformteile 2, 3 zu erwärmen, sind darüber hinaus Medienschnittstellen 10a, 10b vorgesehen, über die in den Blasformteilen 2, 3 gebildete Fluidkanäle mit einer Medienversorgung gekoppelt sind. Bei der Medienversorgung handelt es sich in diesem Fall um eine Fluidversorgung z .B. einer Temperiervorrichtung, welchem ein temperiertes Fluid bzw. ein Temperierfluid bereitstellt. Dieses Temperierfluid strömt über die Medienschnittstellen 10a in das jeweilige Blasformteil 2, 3 und über die Medienschnittstelle 10b wieder heraus. Die Medienschnittstellen 10a, 10b werden hierzu üblicherweise fest während der Montage mit der Medienversorgung verbunden, sodass die daran angeschlossenen Leitungen während der Schwenkbewegung mitbewegt werden.

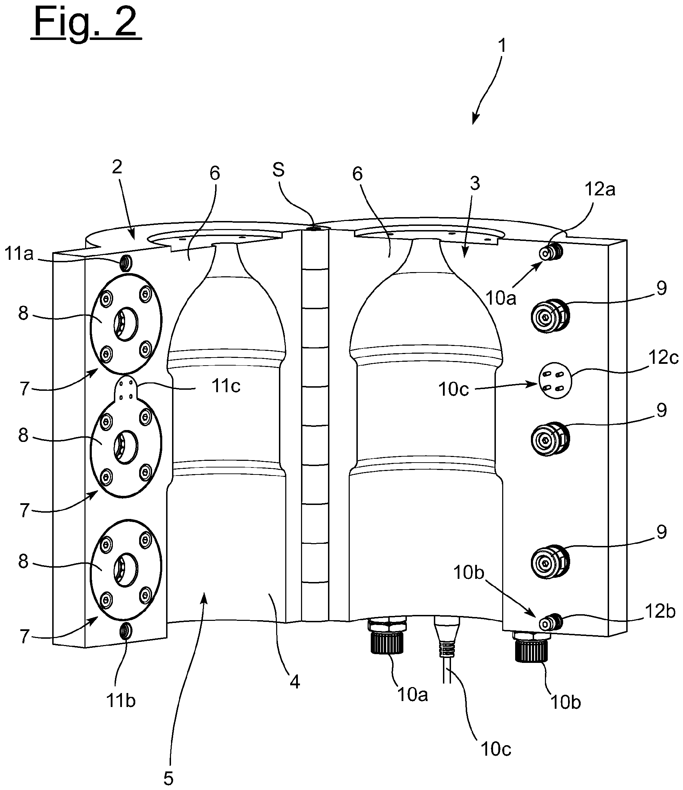

Im Gegensatz dazu lehrt dann die Fig. 2 eine erfindungsgemäße Ausgestaltung, bei der lediglich das zweite Blasformteil 3 mit festen Medienschnittstellen 10a, 10b, 10c ausgebildet ist, wobei die Medienschnittstelle 10c im Gegensatz zu den Medienschnittstellen 10a, 10b als elektrischer Anschluss ausgebildet ist und somit die Übertragung eines elektrischen Signals ermöglicht.

Um auch das erste Blasformteil 2 mit Medien versorgen zu können, sind weitere Medienschnittstellen 10a, 10b, 10c vorgesehen welche zwischen den Blasformteilen 2, 3 wirken. So bestehen die Medienschnittstellen 10a, 10b jeweils aus einem erstem Schnittstellenteil 11a, 11b und einem zweiten Schnittstellenteil 12a, 12b, welche die Medienschnittstellen 10a, 10b in der Schließstellung mit einer Medienversorgung koppeln und in der Öffnungsstellung von dem Medienversorgung entkoppeln, wobei sich in diesem Zusammenhang ausschließlich auf das erste Blasformteil 2 bezogen wird. Die Schnittstellenteile 11a, 11b, 12a, 12b sind entsprechend mit Fluidkanälen innerhalb der Blasformteile 2, 3 verbunden, wobei dann in der Schließstellung das Fluid z. B. ein Temperierfluid über die Schnittstellenteil 11a, 12a an das erste Blasformteil 2 übertragen und über die Schnittstellenteile 11b, 12b an das zweite Blasformteil zurückgeführt wird.

Hierbei ist von Vorteil, wenn zumindest die Schnittstellenteile 12a, 12b in einer Öffnungsstellung nach außen hin fluiddicht ausgebildet sind, damit kein Fluid in einer Öffnungsstellung aus dem Blasformteil 3 hinaus gelangen kann. Vorzugsweise können aber auch die ersten Schnittstellenteile 11a, 11b fluiddicht ausgebildet sein.

Darüber hinaus ist noch eine weitere Medienversorgung 10c vorgesehen, wobei auch hier das erste Blasformteil 2 ein erstes Schnittstellenteil 11c und das zweite Blasformteil ein zweites Schnittstellenteil 12c aufweist, über welche eine elektrische Kontaktierung ermöglicht wird. Diese elektrische Kontaktierung ist als Steckverbindung ausgebildet, wobei die männlichen Stifte des zweiten Schnittstellenteils 12c in Aufnahmen des ersten Schnittstellenteil 11c eingreifen. Das erste Schnittstellenteil 11c ist darüber hinaus in eine Verriegelungseinrichtung 7 bzw. in das Spannfutter 8 integriert.

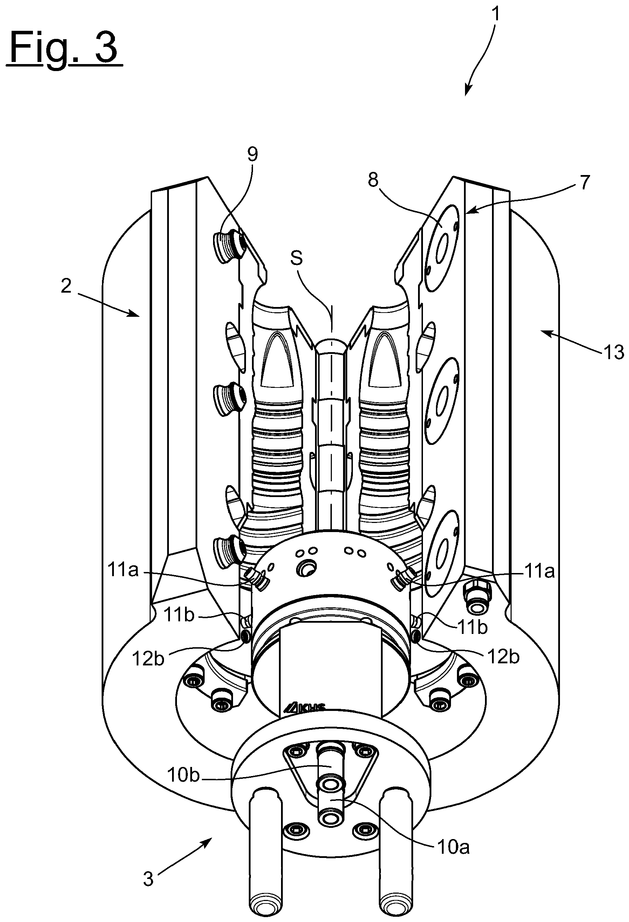

Die Fig. 3 zeigt eine Ausgestaltung mit insgesamt drei Blasformteilen 2, 3, 13, wobei in diesem Fall das zweite Blasformteil 3 als Bodenteil ausgebildet ist. Die Verriegelungseinrichtungen 7 wirken dann zwischen dem ersten Blasformteil 2 und dem dritten Blasformteil 13, wobei die Spannbolzen 9 in diesem Fall in dem ersten Blasformteil 2 und die Spannfutter 8 in dem dritten Blasformteil 13 angeordnet sind.

Auch bei einer Ausgestaltung als Bodenteil wird das zweite Blasformteil 3 gegenüber dem ersten und dem dritten Blasformteile 2, 13 verschwenkt, wobei das zweite Blasformteil 3 feste Medienanschlüsse 10a, 10b aufweist. Eine Verbindung des ersten und des dritten Blasformteil 2, 13 erfolgt dann in derart, dass das zweite Blasformteil 3 insgesamt vier erste Schnittstellenteile 11a, 11b aufweist, welchem jeweils in zugeordnete zweite Schnittstellenteile 12a, 12b in dem ersten und dem dritten Blasformteil eingreifen 2,13.

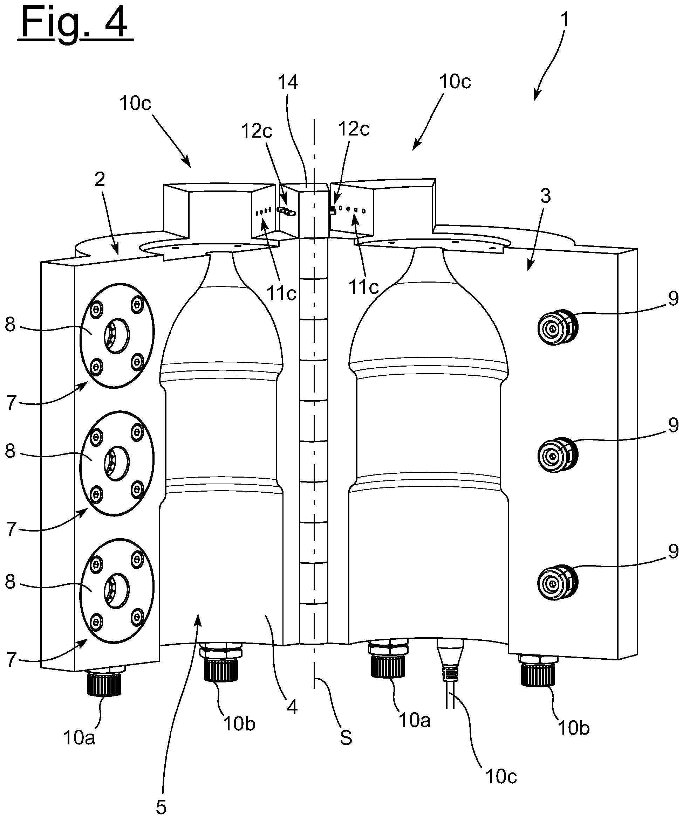

Die Figur 4 zeigt eine erfindungsgemäße Blasform 1 mit einem Anschlussblock 14, wobei der Anschlussblock 14 an beiden Seiten jeweils ein zweites Schnittstellen Teil 12c als Teil einer Medienschnittstelle 10c aufweist, und über welche elektrische Daten übertragen werden können.

Entsprechend sind an dem ersten und dem zweiten Blasformteil 2, 3 jeweils erste Schnittstellenteile 11c vorgesehen, welche gemäß der Figur 4 in der Schließstellung mit den zweiten Schnittstellenteilen 12c zusammenwirken und wobei die Medienschnittstellen 10c als Steckverbindung ausgebildet sind.

### Bezugszeichenliste

- 1: Blasform
- 2, 3, 13: Blasformteile
- 4: Ausformung
- 5: Blaskavität
- 6: Anlagefläche
- 7: Verriegelungseinrichtung
- 8: Spannfutter
- 9: Spannbolzen
- 10a, 10b, 10c: Medienschnittstellen
- 11a, 11b, 11c: erste Schnittstellenteile
- 12a, 12b, 12c: zweite Schnittstellenteile
- 14: Anschlussblock

- S: Schwenkachse

## Patentansprüche

1. Blasformeinheit für eine Blasformanlage zum Umformen von Vorformlingen aus Kunststoff zu Behältern mit einer Blasform (1) und einer der Blasform (1) zugeordneten Blaseinrichtung, wobei die Blasform (1) aus einem ersten und zumindest einem zweiten Blasformteil (2, 3) gebildet ist, welche zwischen einer Öffnungs- und Schließstellung zueinander verschwenkbar sind,
**dadurch gekennzeichnet, dass**
das erste und/oder das zweite Blasformteil (2, 3) über eine Medienschnittstelle (10a, 10b, 10c) in der Schließstellung mit einer Medienversorgung verbunden und in der Öffnungsstellung von der Medienversorgung entkoppelt ist.

2. Blasformeinheit nach Anspruch 1, **dadurch gekennzeichnet, dass** die Medienschnittstelle (10a, 10b, 10c) ein an dem ersten oder dem zweiten Blasformteil (2, 3) angeordnetes erstes Schnittstellenteil (11a, 11b, 11c) aufweist, welches mit einem mit der Medienversorgung verbundenen zweiten Schnittstellenteil (12a, 12b, 12c) in der Schließstellung verbindbar ist.

3. Blasformeinheit nach Anspruch 2, **dadurch gekennzeichnet, dass** die Medienschnittstelle (10a, 10b, 10c) als Fluidanschluss ausgebildet ist und das erste Schnittstellenteil (11a, 11b, 11c) an eine in dem ersten und/oder zweiten Blasformteil (2, 3) angeordneten Fluidkanal anschließt.

4. Blasformeinheit nach Anspruch 2, **dadurch gekennzeichnet, dass** der Fluidkanal an beiden Enden an eine Medienschnittstelle (10a, 10b, 10c) anschließt.

5. Blasformeinheit nach Anspruch 4, **dadurch gekennzeichnet, dass** der Fluidkanal in der Schließstellung an eine Temperiervorrichtung anschließt.

6. Blasformeinheit nach Anspruch 2, **dadurch gekennzeichnet, dass** der Fluidkanal an einem der Medienschnittstelle (10a, 10b, 10c) gegenüberliegenden Ende offen ist.

7. Blasformeinheit nach einem der Ansprüche 3 bis 6, **dadurch gekennzeichnet, dass** das erste und/oder zweite Schnittstellenteil (11a, 11b, 11c, 12a, 12b, 12c) in der Öffnungsstellung fluiddicht ausgebildet ist.

8. Blasformeinheit nach einem der Ansprüche 2 bis 7, **dadurch gekennzeichnet, dass** zumindest eine Medienschnittstelle (10a, 10b, 10c) als elektrischer Anschluss ausgebildet ist, wobei das erste Schnittstellenteil (11a, 11b, 11c) an zumindest einen elektrischen Verbraucher an oder in dem ersten und/oder dem zweiten Blasformteil (2, 3) anschließt.

9. Blasformeinheit nach Anspruch 8, **dadurch gekennzeichnet, dass** der elektrische Verbraucher eine Temperiervorrichtung und/oder eine Messeinrichtung ist.

10. Blasformeinheit nach Anspruch 8 oder 9, **dadurch gekennzeichnet, dass** die Schnittstellenteile (11a, 11b, 11c, 12a, 12b, 12c) als Steckverbindung ausgebildet sind.

11. Blasformeinheit nach einem der Ansprüche 2 bis 10, **dadurch gekennzeichnet, dass** die miteinander verbindbaren Schnittstellenteile (11a, 11b, 11c, 12a, 12b, 12c) zumindest einer Medienschnittstelle (10a, 10b, 10c) an dem ersten und dem zweiten Blasformteil (2, 3) angeordnet sind.

12. Blasformeinheit nach Anspruch 11, **dadurch gekennzeichnet, dass** das zweite Blasformteil (3) feststehend ausgebildet ist, wobei das erste Schnittstellenteil (11a, 11b, 11c) zumindest einer Medienschnittstelle (10a, 10b, 10c) an dem ersten Blasformteil (2) angeordnet ist.

13. Blasformeinheit nach Anspruch 11 oder 12, **dadurch gekennzeichnet, dass** die Blasformteile (2, 3) über zumindest eine Verriegelungseinrichtung (7) in der Schließstellung miteinander verriegelbar sind, wobei zumindest eine Medienschnittstelle (10a, 10b, 10c) in der Verriegelungseinrichtung (7) angeordnet ist.

14. Blasformeinheit nach einem der Ansprüche 2 bis 13, **dadurch gekennzeichnet, dass** ein mit der Medienversorgung verbundener Anschlussblock (14) mit zumindest einem zweiten Schnittstellenteil (12a, 12b, 12c) vorgesehen ist, wobei das erste und/oder das zumindest zweite Blasformteil (2, 3) jeweils über ein erstes Schnittstellenteil (11a, 11b, 11c) mit dem Anschlussblock (14) in der Schließstellung verbunden ist.

15. Blasformanlage mit zumindest einer Blasformeinheit nach einem der vorangegangenen Ansprüche, wobei die zumindest eine Blasformeinheit an einem rotierbar angetrieben Träger angeordnet ist.
